# EUROPEAN PATENT APPLICATION

(11) **EP 1 067 413 A1**
(43) Date of publication of application: **10.01.2001**
(21) Application number: 00114302.3
(22) Date of filing: 04.07.2000
(51) Int. Cl.: G02B 6/28

(54) **Optical coupling device**

(30) Priority: 05.07.1999 JP 19005899
(71) Applicant: ALPS ELECTRIC CO., LTD., Tokyo 145-8501 (JP)
(72) Inventor: Kikuchi, Kimihiro, c/o Alps Electric Co., Ltd., Tokyo 145 (JP); Hattori, Atsunori, c/o Alps Electric Co., Ltd., Tokyo 145 (JP)
(74) Representative: Klunker . Schmitt-Nilson . Hirsch

(57) **Abstract**

An optical coupler comprises a light conductor bundle formed by bundling a plurality of light conductors, each of which has one end surface having a sectorial shape and the other end surface having a circular shape, and which are joined to have a circular shape at the sectorial end side, wherein one end surface of a first optical fiber having the same diameter as that of the joined end surface is connected to the joined end surface while second optical fibers are connected to the circular ends, respectively, thereby branching or joining light transmitted through the first optical fiber and the second optical fibers by means of the light conductors.

## Description

### BACKGROUND OF THE INVENTION

### Field of the Invention

The present invention relates to an optical coupler using a plurality of optical fibers and, more particularly, to an optical coupler suitable for connecting multimode optical fibers.

### Description of the Related Art

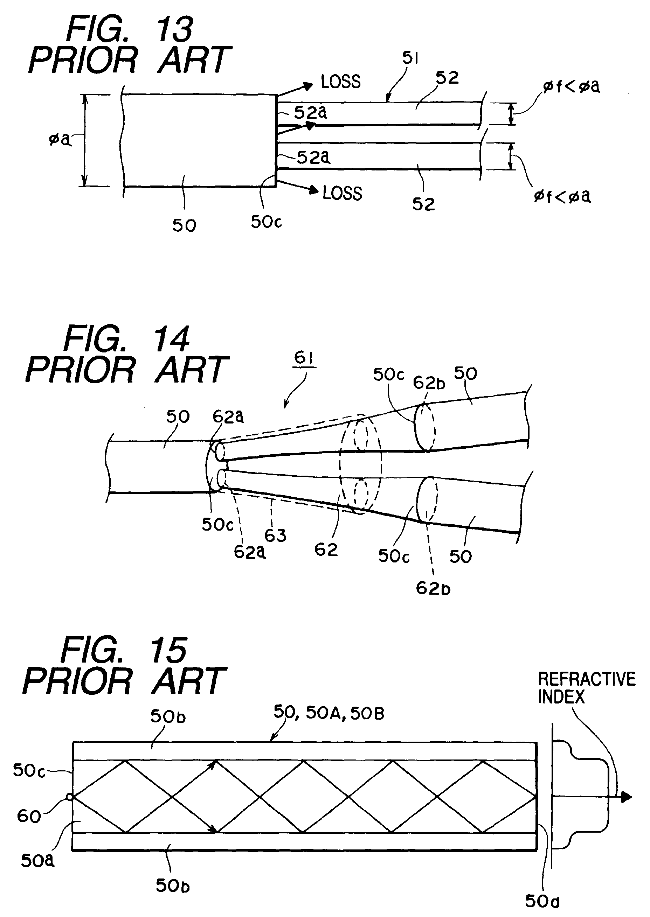

Fig. 13 shows a generally known optical coupler 51 for coupling a single optical fiber to a bundle of optical fibers. As shown in Fig. 15, an optical fiber (plastic fiber) 50 is an elongate fiber having a circular cross section and consisting of a core 50a having a diameter (≒ φ **a**) of 0.98mm and formed of a resin, such as a methacrylic resin, and a thin-wall cladding 50b having an outside diameter of 1.00 mm, formed of a fluorocarbon resin and covering the core 50a. The cut end surfaces 50c and 50d of the optical fiber 50 are mirror-finished by polishing. Light emitted from a light source 60, such as a semiconductor laser, and made incident on the end surface 50c is transmitted so as to travel through the core 50a repeating reflection and to go out from the other end surface 50d.

The optical coupler 51 shown in Fig. 13 has a plurality of fine, elongate light conductors 52 of a diameter φ **f** having a circular cross section. Each of light conductors 52, similarly to the optical fiber 50, consists of a core of a methacrylic resin and a cladding of a fluorocarbon resin covering the core. The light conductors 52 are gathered in a bundle and the bundle is partly covered with a sheath of nylon, not shown. Each light conductor 52 of the optical coupler 51 has one end 52a joined to the end surface 50c of the optical fiber 50 and the other end joined to the ends of a plurality of optical fibers, not shown.

In this optical coupler 51, the ends 52a of the plurality of light conductors 52 must be joined to the end surface 50c of the optical fiber 50, the diameter φ **f** of the end surface 52a of each light conductor 52 must be smaller than the diameter of the optical fiber 50. Accordingly, there is no substantial energy loss when light travels from the fine light conductors 52 into the optical fiber 50, i.e., when light travels from the right to the left as viewed in Fig. 13. However, when light travels from the optical fiber 50 into the fine light conductors 52, i.e., from the left to the right as viewed in Fig. 13, a splice loss is produced because the area of the end surface 50c of the optical fiber 50 is different from the sum of the areas of the end surfaces 52a and light leaks outside. When a plurality of optical fibers having a diameter equal to that of the optical fiber 50 shown in Fig. 13 are connected to the other end of the fine light conductor 52 to branch or couple light, a splice loss is produced similarly at the end surface. Such a problem signifies that, when a plurality of optical fibers having the same diameter are connected to the fine light conductor 52 by the optical coupler 51 for bilateral light transmission, the optical coupler 51 produces a large splice loss at the joints of the end surface 52a of the fine light conductor 52 and the end surfaces of the optical fibers, and accurate light transmission cannot be achieved.

An optical coupler overcoming the disadvantages of the prior art optical coupler 51 and capable of connecting a plurality of optical fibers of the same diameter will be explained.

As shown in Fig. 14, an optical coupler 61 has a plurality of tapered light conductors 62 having a variable circular cross section. Each light conductor 62 is formed of a material that is the same as that of the foregoing light conductor 52. The tapered light conductor 62 has one end 62a of a diameter smaller than the diameter φ **a** of the optical fiber 50 and the other end 62b of a diameter equal to the diameter φ **a** of the optical fiber 50. The light conductors 62 are gathered in a bundle and the bundle is covered with a sheath 63 of a resin. Since the larger end surface 62b of the light conductor 62 and one end 50c of an optical fiber 50 are circular surfaces of the same size, the respective end surfaces 62b and 50c of the light conductor 62 and the optical fiber 50 coincide exactly with each other and the light conductor 62 and the optical fiber 50 can be accurately connected. Consequently, splice loss at the joint of the optical coupler 61 and the optical fiber 50 is reduced when light is transmitted in a unilateral transmission mode from the right to the left as viewed in Fig. 14.

Although both the end surface 50c of the optical fiber 50 and the end surface 62a of the light conductor 62 are circular, the end surfaces 50c and 62a have different diameters, respectively, and accordingly the end surface of a bundle of a plurality of light conductors 62 of a small diameter do not coincide with the end surface of the optical fiber 50 of a large diameter. Therefore, splice loss is produced inevitably when light is transmitted in a bilateral light transmission mode.

### SUMMARY OF THE INVENTION

It is an object of the present invention to provide an optical coupler capable of connecting optical fibers of the same diameter at a low splice loss and of being easily fabricated.

According to a first aspect of the present invention, an optical coupler is provided to transmit light from a first optical fiber to a plurality of second optical fibers, and vice versa. The device includes a bundle of light conductors, each of which has a sectorial shape at one end surface thereof and a circular shape at the other end surface thereof, and which are joined to have a circular shape at the sectorial end side, wherein one end surface of the first optical fiber having the same diameter as that of the joined end surface is connected to the joined end surface while second optical fibers each having the same diameter as that of the circular end surface are connected to the circular ends, respectively, and thereby the light is branched or joined and transmitted.

According to second aspect of the present invention, it is preferable that the area of one end surface of each light conductor is smaller than that of the other end surface of the same, the sectional shape and the sectional area of the light conductor are varied gradually from the one end surface thereof toward the other end surface thereof, and the other end surface thereof having a circular shape is joined to the second optical fiber having the diameter equal to that of the other end surface of the conductor.

According to third aspect of the present invention, it is preferable that the sectorial shape of the first end surface of each light conductor corresponds to one of N sectors formed by dividing a circle into N equal divisions.

According to fourth aspect of the present invention, it is preferable that the light conductors are optical fibers.

According to fifth aspect of the present invention, it is preferable that each light conductor is formed of a transparent resin by molding, and a reflecting film is formed to cover the conductor to cause total internal reflection of light in the conductor.

### BRIEF DESCRIPTION OF THE DRAWINGS

The above and other objects, features and advantages of the present invention will become more apparent from the following description taken in connection with the accompanying drawings, in which:
Fig. 1 is a perspective view of an optical coupler in a first embodiment according to the present invention;
Fig. 2 is a sectional view taken on line 2-2 in Fig. 1;
Fig. 3 is sectional view taken on line 3-3 in Fig. 1;
Fig. 4 is sectional view taken on line 4-4 in Fig. 1;
Fig. 5 is a perspective view of a light conductor included in the optical coupler shown in Fig. 1;
Fig. 6 is a perspective view of assistance in explaining a method of using the optical coupler in the first embodiment;
Fig. 7 is a sectional view of a bonded section of an optical coupler in a second embodiment according to the present invention;
Fig. 8 is a sectional view of a body section of the optical coupler in the second embodiment;
Fig. 9 is a sectional view of branch sections of the optical coupler in the second embodiment;
Fig. 10 is a sectional view of a bonded section of an optical coupler in a third embodiment according to the present invention;
Fig. 11 is a sectional view of a body section of the optical coupler in the third embodiment;
Fig. 12 is a sectional view of branch sections of the optical coupler in the third embodiment;
Fig. 13 is a typical front elevation of a prior art optical coupler;
Fig. 14 is a schematic perspective view of another prior art optical coupler; and
Fig. 15 is a typical sectional view of an optical fiber.

### DESCRIPTION OF THE PREFERRED EMBODIMENTS

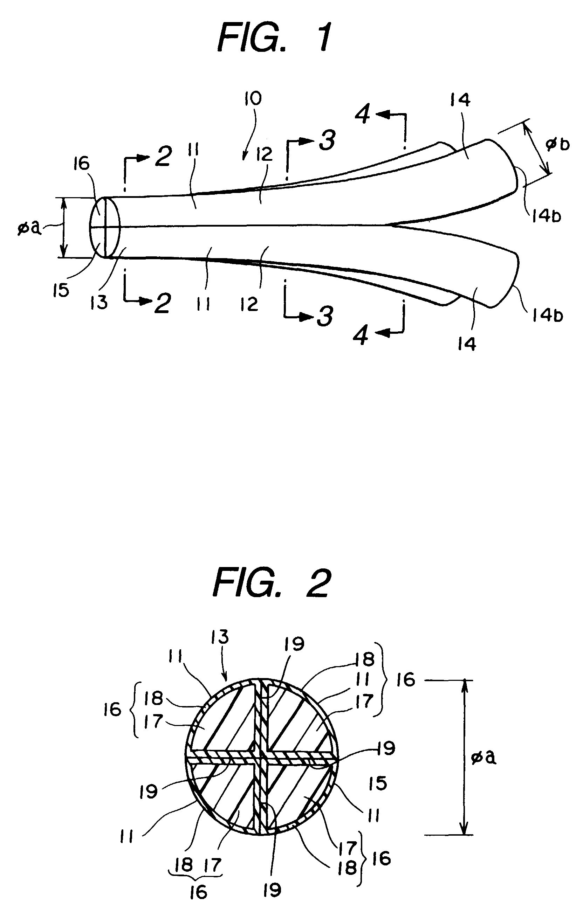

Referring to Fig. 1, an optical coupler 10 in a first embodiment according to the present invention includes a bundle of four light conductors 11 of resins having variable sectional areas gradually increasing from a bonded end toward branched ends. The optical coupler 10 has a middle body section 12, a bonded section 13 on one side of the body section 12 and a plurality of branch sections 14 on the other side of the body section 12.

As shown in Figs. 2 to 4, each light conductor 11 has a round core 17 of a transparent methacrylic resin, such as polymethyl methacrylate (PMMA), a thin reflecting film 18 of a resin such as a transparent fluorocarbon resin having a refractive index smaller than that of the resin forming the core 17, and covering the core 17. As shown in Fig. 2, the bonded section 13 formed by combining end portions of the light conductors 11 has an end surface 15 having the shape of a regular circle of a diameter φ **a** of about 1 mm. The end surface 15 is mirror-finished by polishing. The end surface 15 has a circular shape consisting of N sectorial end surfaces (four sectorial end surfaces in this embodiment) 16 formed by dividing a circle into N equal parts. The number of the sectorial end surfaces 16 is equal to that of the branch sections 14. Each reflecting film 18 has joining surfaces 19. The light conductors 11 are bonded together by joining together joining surfaces 19 of the reflecting films 18 by a bonding means, such as an adhesive or a hot-bonding process.

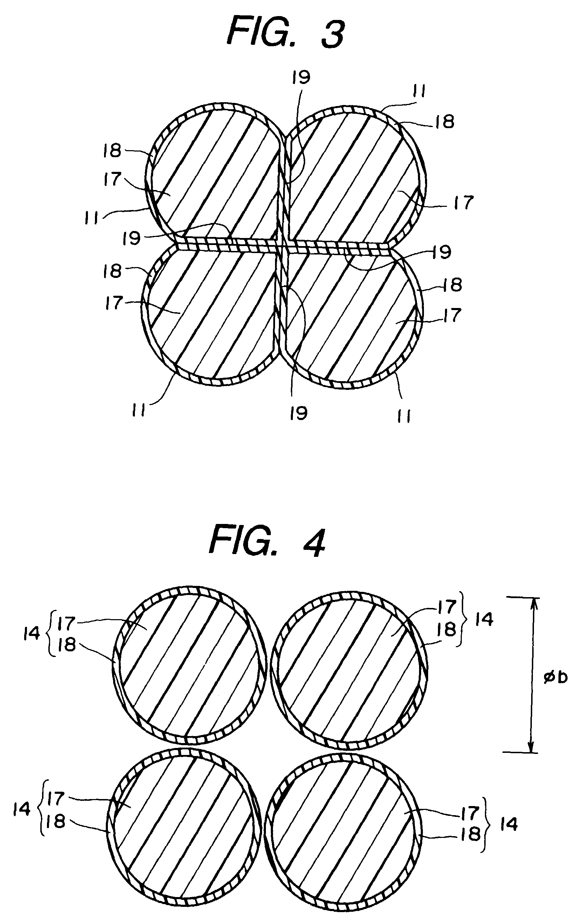

Referring to Fig. 3, a middle portion of the body section 12 of the optical coupler 10 has a sectional shape substantially resembling the shape of a four-leaf clover. The adjacent reflecting surfaces 18 are closely bonded together. Each light conductor 11 in the body section 12 has a sectional area greater than the area of the sectorial end surface 16. The area of the joining surfaces 19 of the light conductor 11 in the body section 12 is smaller than that of the same in the bonded section 13.

Referring to Fig. 4, each branch section 14 of the optical coupler 10 has an end surface 14b having the shape of a regular circle. The core 17 in the branch section 14 has a circular shape and is uniformly coated with the thin reflecting film 18. The diameter φ **b** of end surface 14b of each branch section 14 is about 1 mm, which is equal to the diameter φ **a** of a multimode optical fiber 50 and the diameter φ **a** of the bonded section 13. The optical coupler 10 in the first embodiment has the four branch sections 14. However, optical coupler 10 may have any desired number of branch sections 14. The shape of the sectorial end surfaces 16 of the bonded section 13 is dependent on the number N of the branch sections 14. The central angle of the sectorial end surfaces 16 is 360°/N.

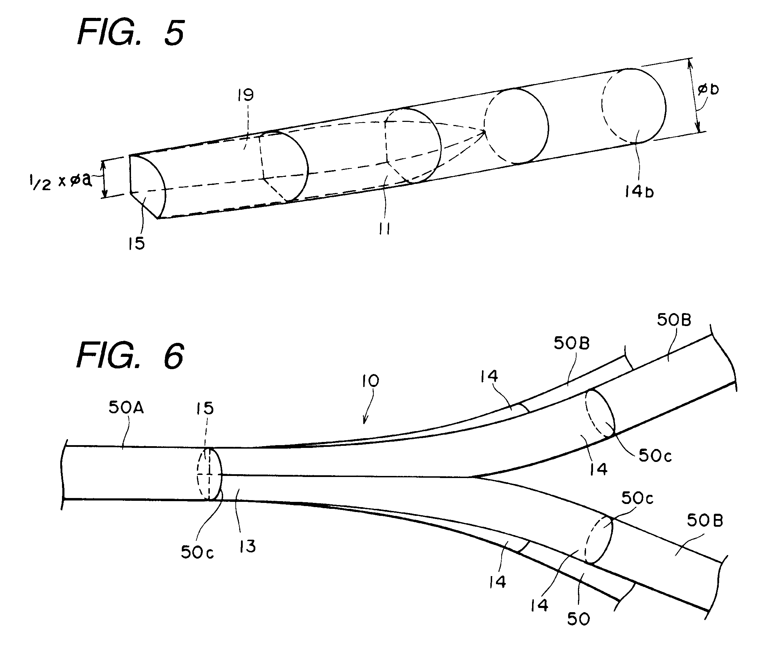

The optical coupler 10 has a sectional shape varying from the bonded section 13 through the body section 12 toward the branch sections 14. For example, as shown in Fig. 5, each of the sectorial end surfaces 16 of the light conductors 11 forming the end surface 15 of the optical coupler 10 has the shape of a sector having a central angle of 90°, the sectional area of each light conductor 11 increases from the sectorial end surface 16 toward a middle portion of the body section 12, and the area of the joining surface 19 of each light conductor 11 decreases gradually toward the middle portion of the body section 12. As mentioned above, the diameter φ **b** of the branch section 14 is about 1 mm, which is equal to the diameter of the multimode optical fiber 50. Since the reflecting film 18 is formed of the material having a refractive index smaller than that of the material of the core 17, light traveling through the core 17 and incident on the boundary between the core 17 and the reflecting film 18 undergoes total internal reflection and does not leak from the light conductor 11.

A method of fabricating the optical coupler 10 will be described hereinafter. An injection mold having a top half mold and a bottom half mold is prepared. When the top half mold and the bottom half mold are joined, a cavity having the shape of the light conductor 11 shown in Fig. 5 is formed in the injection mold. The injection mold is mounted on an injection molding machine, not shown, and a molten material, such as molten PMMA, for forming the core 17 is injected into the injection mold to mold the core 17 of the light conductor 11. The core 17 is coated uniformly with a resin having a refractive index smaller than that of the resin forming the core 17 by dipping or the like to form the thin reflecting film 18 to complete the light conductor 11 shown in Fig. 5. Then, an adhesive or the like is applied to the joining surfaces 19 (Fig. 5) of the four light conductors 11, the four light conductors 11 are arranged with the joining surfaces 19 in accurate contact with each other and the joining surfaces 19 are bonded together to complete the optical coupler 10.

The light conductors 11 of the optical coupler 10 need not necessarily be formed by injection molding; the same may be formed by hot-molding a base fiber for forming the optical fibers 50. Since the base fiber for forming the optical fiber 50 has a core corresponding to the core 17 and a cladding corresponding to the reflecting film 18, a process, such as a dipping process, for forming the reflecting film 18 is unnecessary and hence steps of fabricating the optical coupler 10 can be reduced. The light conductors 11 of the optical coupler 10 may be formed by using a plastic optical fiber as a base fiber for the light conductors 11 which is formed in a desired shape by a hot-forming process.

As shown in Fig. 6, an end surface 50c of a first optical fiber 50A is aligned with and joined to the end surface 15 of the bonded section 13 of the optical coupler 10, and end surfaces 50c of second optical fibers 50B are aligned with and joined to the end surfaces 14b of the branch sections 14 of the optical coupler 10, respectively. The corresponding end surfaces may be joined separably by a detachable connector, permanently with an adhesive or by welding using discharge heating.

Light coming from the first optical fiber 50A and incident on the bonded section 13 of the optical coupler 10 is distributed to the branch sections 14 and the light distributed to the branch sections 14 enters the second optical fibers 50B. Thus, the optical coupler 10 couples the first optical fiber 50A to the second optical fibers 50B at a reduced splice loss. This arrangement of the optical fibers 50A and 50B and the optical coupler 10 can be used also for bilateral light transmission at a low splice loss.

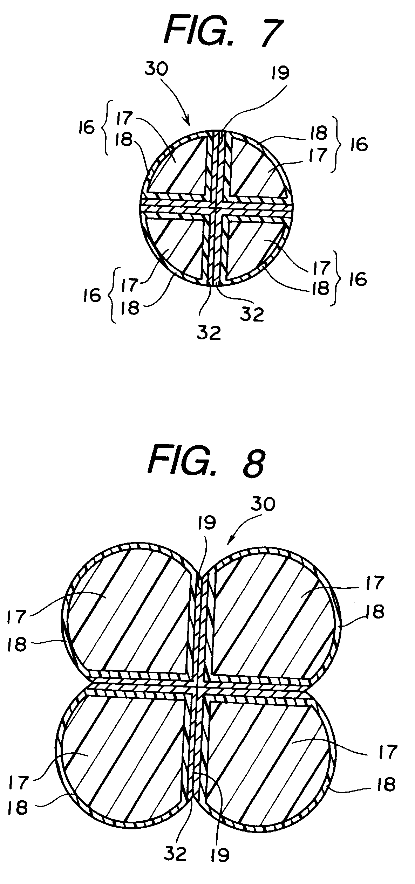

An optical coupler 30 in a second embodiment according to the present invention will be described hereinafter with reference to Figs. 7 to 9, which correspond to Figs. 2 to 4, respectively. The optical coupler 30 differs from the optical coupler 10 in that it employs reflecting metal thin films formed on joining surfaces of sectorial sections.

Referring to Figs. 7 to 9, the optical coupler 30 in a second embodiment according to the present invention includes a bundle of four light conductors 11 each having a core 17 and a thin reflecting film 18 made of a resin with a low refractive index and covering the core 17. Joining surfaces 19 of sectorial sections 16 of the light conductors 11 are coated with reflecting metal thin films 32, respectively. When the light conductors 11 are bundled, the reflecting metal thin films 32 extend between the adjacent joining surfaces 19 in the shape of a cross as shown in a sectional view in Fig. 7. The reflecting metal thin films 32 are not formed on the surfaces of portions of the light conductors 11 in branch sections 14 of the optical coupler 30. The reflecting metal thin films 32 are formed only on the joining surfaces 19 of the light conductors 11 in a body section 12 and a bonded section 13 of the optical coupler 30.

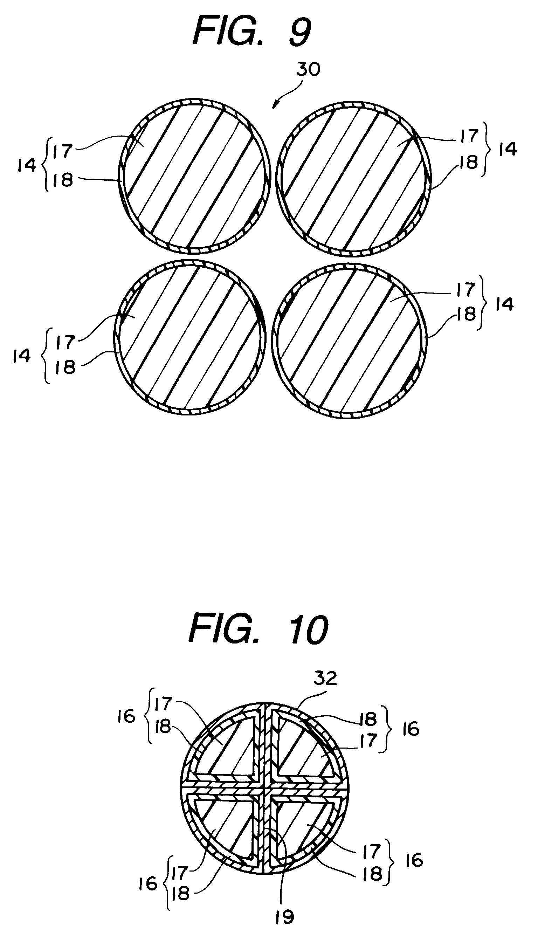

As shown in Fig. 9, the reflecting metal thin films 32 are not formed on portions of the light conductors 11 in the branch sections 14. The reflecting metal thin films 32 are formed only on the joining surfaces 19 of the portions of the light conductors 11 in the body section 12 and the bonded section 13.

The light conductor 11 of a predetermined shape as shown in Fig. 5 is formed at first, and then the reflecting metal thin film 32 of a metal having a refractive index smaller than that of the core 17, such as Au, Al or Ni, is formed on the joining surface 19 by a sputtering process, an evaporation process or the like. Even if the reflecting film 18 is not formed satisfactorily and light is not reflected for total internal reflection by the boundary between the core 17 and the reflecting film 18, light can be reflected for total internal reflection by the boundary between the reflecting film 18 and the reflecting metal thin film 32 covering the reflecting film 18, so that light can be surely confined in the core 17.

Light outgoing from an end surface 50c of a transmission side optical fiber 50 joined to the end surface of the bonded section, not shown, comes incident on the bonded section of the optical coupler 30, travels through the body section of the optical coupler 30, and is distributed to the branch sections 14. The light distributed to the branch sections 14, then, smoothly enters end surfaces 50c of reception side optical fibers 50 joined to the free ends of the branch sections 14.

An optical coupler 40 in a third embodiment according to the present invention will be described with reference to Figs. 10 to 12, which correspond to Figs. 7 to 9, respectively.

The optical coupler 40 differs from the optical coupler 30 in that it employs metal thin films formed on resin-made reflecting films 18 on light conductors 11 to cover the entire surfaces thereof.

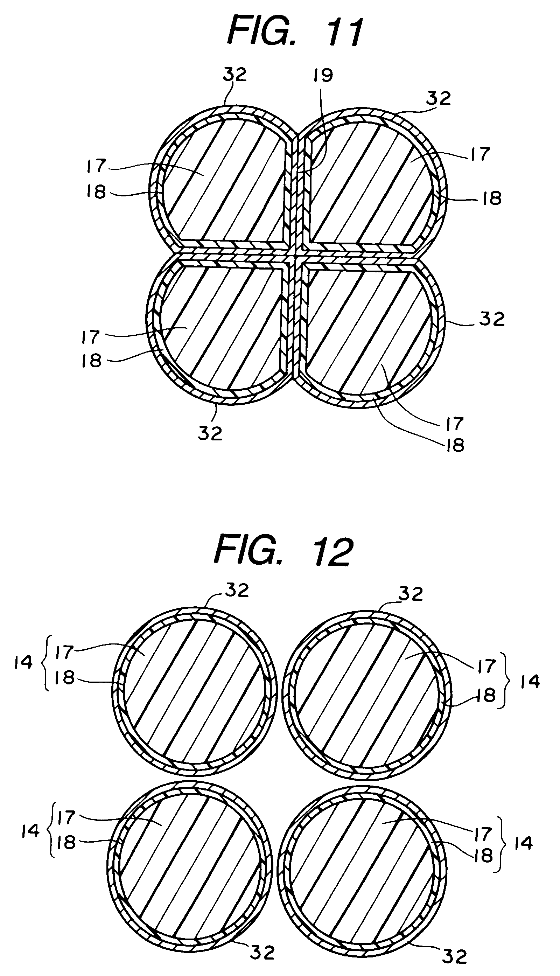

Referring to Figs. 10 to 12, the optical coupler 40 has light conductors 11, reflecting films 18 covering the light conductors 11 and the metal thin films 32 entirely covering the reflecting films 18. As shown in Fig. 12, the metal thin films 32 are formed on all portions of the reflecting films 18 including the portions thereof at joining sections 19. Even if light is not reflected for total internal reflection by the boundary between the core 17 and the reflecting film 18 therefore, light can be reflected for total internal reflection by the boundary between the reflecting film 18 and the metal thin film 32 covering the reflecting film 18, so that light can be transmitted at a small transmission loss.

When the metal thin films 32 are formed uniformly and satisfactorily on the light conductors 11, the reflecting films 18 may be omitted and only the metal thin films 32 may be used to reflect light for total internal reflection. Omission of the reflecting films 18 reduces the steps of the manufacturing process and reduces material costs significantly. When the reflecting films 18 are omitted and the light conductors 11 are coated with only the metal thin films 32, light traveling through the cores 17 of the light conductors 11 is reflected by the metal thin films 32.

Although the optical coupler in each of the foregoing embodiments are used for distributing light from one sending optical fiber 50 to four receiving optical fibers 50, the number of the receiving optical fibers is not necessarily limited to four.

When incoming light is to be distributed to N receiving optical fibers, receiving end sections of N light conductors having sectorial end surfaces respectively of the shapes of N divisions (not necessarily N equal divisions) of a regular circle are bundled and joined together with an adhesive or the like to provide an optical coupler capable of distributing light to the N optical fibers at a low splice loss.

As is apparent from the foregoing description, according to the present invention, an optical coupler is provided to transmit light from a first optical fiber to a plurality of second optical fibers, and vice versa. The device includes a bundle of light conductors, each of which has a sectorial shape at one end surface thereof and a circular shape at the other end surface thereof, and which are joined to have a circular shape at the sectorial end side, wherein one end surface of the first optical fiber having the same diameter as that of the joined end surface is connected to the joined end surface while second optical fibers each having the same diameter as that of the circular end surface are connected to the circular ends, respectively, and thereby the light is branched or joined and transmitted. Since the diameter of the end surfaces of the light conductors is equal to that of end surfaces of the optical fibers to be connected to the end surfaces of the light conductors, splice loss at the joints of the light conductors and the optical fibers can be reduced and the construction of the optical coupler is particularly effective in bilateral light transmission.

The area of one end surface of each light conductor is smaller than that of the other end surface of the same, the sectional shape and the sectional area of the light conductor are varied gradually from the one end surface thereof toward the other end surface thereof, and the other end surface thereof having a circular shape is joined to the second optical fiber having the diameter equal to that of the other end surface of the conductor. Since the sectional shape and the sectional area of the light conductor are varied gradually, transmission loss in the light conductor can be reduced.

Since one end surface of the light conductor has the shape of one of N sectors formed by dividing a circle into N equal divisions, the end portions of the light conductors having the same shape can be easily bundled together.

The light conductors can be easily formed by simply hot-processing ordinary optical fibers.

Since the light conductors are formed of a transparent resin and coated with the reflecting film to subject light to total internal reflection in the light conductors, splice loss can be reduced, light being transmitted by the light conductor undergoes total internal reflection at the boundary between the light conductor and the reflecting film, so that transmission loss can be reduced.

Although the invention has been described in its preferred embodiments with a certain degree of particularity, obviously many changes and variations are possible therein. It is therefore to be understood that the present invention may be practiced otherwise than as specifically described herein without departing from the scope and spirit thereof.

## Claims

1. An optical coupler comprising a light conductor bundle formed by bundling a plurality of light conductors, each of which has one end surface having a sectorial shape and the other end surface having a circular shape, and which are joined to have a circular shape at the sectorial end side, wherein one end surface of a first optical fiber having the same diameter as that of the joined end surface is connected to the joined end surface while second optical fibers are connected to the circular ends, respectively, thereby branching or joining light transmitted through the first optical fiber and the second optical fibers by means of the light conductors.

2. The optical coupler according to claim 1, wherein the area of the one end surface of each light conductor is smaller than that of the other end surface of the same, sectional shape and sectional area of each light conductor are varied gradually from the one end surface toward the other end, the other end surface has a circular shape of a diameter equal to that of the second optical fiber joined to the other end surface of the light conductor.

3. The optical coupler according to claim 1 or 2, wherein the sectorial shape of the one end surfaces of each light conductor corresponds to one of N sectors formed by equally dIviding a circle into N divisions.

4. The optical coupler according to any of claims 1 to 3, wherein the light conductors are optical fibers.

5. The optical coupler according to any of claims 1 to 4, wherein each light conductor is formed of a transparent resin by molding, and a reflecting film covering the core to subject light being transmitted by the light conductor to total internal reflection.
